# EUROPÄISCHE PATENTSCHRIFT

(11) **EP 2 181 023 B1**
(45) Veröffentlichungstag und Bekanntmachung des Hinweises auf die Patenterteilung: **12.06.2013**
(21) Anmeldenummer: 08787386.5
(22) Anmeldetag: 21.08.2008
(51) Int. Cl.: B60S 1/08

(54) **OPTISCHER KOPPELKÖRPER**
OPTICAL COUPLING BODY
CORPS DE COUPLAGE OPTIQUE

(30) Priorität: 23.08.2007 DE 102007039776
(43) Veröffentlichungstag der Anmeldung: 05.05.2010
(73) Patentinhaber: Leopold Kostal GmbH & Co. KG, 58513 Lüdenscheid (DE)
(72) Erfinder: BÖBEL, Ralf, 59439 Holzwickede (DE); BLÄSING, Frank, 59457 Werl (DE); WEBER, Thomas, 58513 Lüdenscheid (DE); NEUMANN, Carsten, 44137 Dortmund (DE); ESDERS, Berthold, 58579 Schalksmühle (DE); RÖHR, Michael, 44265 Dortmund (DE); HAGEN, Frank, 58511 Lüdenscheid (DE)
(74) Vertreter: Kerkmann, Detlef
(86) Internationale Anmeldenummer: PCT/EP2008/060944
(87) Internationale Veröffentlichungsnummer: WO 2009/024597

(56) Entgegenhaltungen:
- EP-A- 1 251 048
- EP-A- 1 431 146
- DE-A1-102006 059 554
- US-A- 5 262 640
- US-A1- 2006 215 164

## Beschreibung

Die Erfindung betrifft einen optischen Koppelkörper zur Ankopplung einer optoelektronischen Vorrichtung an eine Fahrzeugscheibe, mit einem transparenten Koppelmedium aus einem Silikonmaterial, welches von einem umlaufenden Rand eines Halterahmens umfasst ist, wobei der Halterahmen als ein separates, nicht mit einem Gehäuseteil der optoelektronischen Vorrichtung verbundenes Einzelteil gefertigt ist, und wobei der Halterahmen an einem Teil der optoelektronischen Vorrichtung ankoppelbar ist, wodurch zugleich der Koppelkörper an einer optisch wirksamen Fläche der optoelektronischen Vorrichtung zur Anlage kommt.

Ein derartiger Koppelkörper ist in der deutschen Offenlegungsschrift DE 10 2006 059 554 A1 beschrieben.

Aus der DE 101 19 219 A1 ist ein Koppelkörper bekannt, bei dem der Halterahmen durch eine äußere Oberfläche des Gehäuses einer optoelektronischen Vorrichtung gebildet ist, an der ein umlaufender Rand angeformt ist.

Das Koppelmedium eines derartigen Koppelkörpers besteht vorzugsweise aus einem gelartigen hochtransparenten Silikonmaterial und dient zur optischen Ankopplung der Optikkörper an die Fahrzeugscheibe zu ermöglichen. Aufgrund seiner niederviskosen Konsistenz passt sich ein gelartiges Koppelmedium gut an die Oberflächen der aneinander zu koppelnden Komponenten an.

Vorbekannte Koppelkörper haben allerdings den Nachteil, dass das Koppelmedium eine innige Verbindung mit der Fahrzeugscheibe und ebenso mit dem Optikkörper der optoelektronischen Vorrichtung eingeht, welche das Koppelmedium an die Fahrzeugscheibe anpresst. Dies ist nachteilig, wenn entweder die Fahrzeugscheibe oder die optoelektronische Vorrichtung ausgetauscht werden soll. In einem solchen Servicefall wird beim Entfernen der optoelektronischen Vorrichtung von der Fahrzeugscheibe das gelartige Koppelmedium zerstört, wonach die an der Fahrzeugscheibe verbleibenden Reste des Koppelmediums von der Fahrzeugscheibe entfernt werden müssen. Da beim Zerreißen des Koppelmediums mitunter sehr kleine Reste entstehen, die zudem sehr fest an der Fahrzeugscheibe anhaften, ist die Rückstandsbeseitigung mit einem hohen Aufwand verbunden.

Darüber hinaus verbleiben in gleicher Weise Rückstände des Koppelmediums am Optikkörper, der ebenfalls auf aufwändige Weise von diesen Rückständen befreit werden muss. Alternativ dazu kann die optoelektronische Vorrichtung auch vollständig ausgetauscht werden, was aber sehr kostenaufwändig ist äußerste Sorgfalt und ist damit nicht immer unproblematisch, zumindest aber aufwändig.

Es stellte sich somit die Aufgabe, einen Koppelkörper zu schaffen, der bei der Montage besonders einfach zu handhaben ist und der besonders im Servicefall auf einfache und kostengünstige Weise austauschbar ist.

Diese Aufgabe wird erfindungsgemäß jeweils durch die kennzeichnenden Merkmale der Ansprüche 1 bis 3 gelöst.

In der ersten erfindungsgemäßen Ausgestaltung ist der Koppelkörper durch eine an die Größe und Ausführung des Halterahmens angepasste Auswahl des verwendeten Silikonmaterials selbsttragend ausgebildet und wird damit mit dem Halterahmen nur an dessen Randflächen verbunden. Eine großflächige Abstützung der optisch wirksamen Oberflächen des Koppelkörpers ist vorteilhafterweise nicht erforderlich.

Die Anbindung des Silikonmaterials an den Halterahmen kann durch eine geeignete Formgebung der inneren Randfläche formschlüssig, oder aber, alternativ oder zusätzlich, mittels chemischer Bindungskräfte erfolgen. Letzteres kann beispielsweise durch eine Oberflächenbehandlung der inneren Randfläche erreicht werden, etwa durch eine Coronabehandlung, durch Anlösen der Oberfläche durch ein Lösungsmittel oder auch durch Aufbringen eines Klebematerials.

In der zweiten erfindungsgemäßen Ausgestaltung ist der Koppelkörper mit einer in den Halterahmen eingezogenen formstabilen Trägerfläche versehen, die starr oder folienartig ausgebildet ist und die eine zusätzliche mechanische Stabilisierung des Koppelmediums erreicht, ohne dass das Koppelmedium an seinen äußeren Stirnflächen abgestützt werden muss.

Vorteilhaft ist es, dass der Koppelkörper durch das innerhalb des Halterahmens fixierte Koppelmedium eine vormontierte Einheit bildet, die im Servicefall leicht austauschbar ist.

Mit Hilfe dieses Halterahmens kann man einerseits den Koppelkörper ohne ihn direkt anfassen zu müssen auf den Optikkörper montieren und andererseits im Servicefall auch wieder leicht vom Optikkörper und von der Scheibe entfernen.

Der Halterahmen weist Halteelemente auf, mit denen er auf dem Optikkörper fixiert wird, wodurch der Koppelkörper eindeutig zum Optikkörper positionierbar ist.

Weitere vorteilhafte Ausgestaltungen und Weiterbildungen sind in den abhängigen Ansprüchen genannt.

Die freien Oberflächen des Koppelmediums können vorteilhaft vor dem Zusammenfügen mit der optoelektronischen Vorrichtung mit jeweils einer Schutzfolie versehen sein. Wird der Koppelkörper als Serviceteil an eine Werkstatt geliefert, kann das Koppelmediums als Berührschutz zusätzlich auf der Ober- und der Unterseite eine z. B. gewachste Schutzfolie aufweisen, die keine innige Verbindung mit dem Koppelmedium eingeht und somit leicht vor der Montage zu entfernen ist.

Die Schutzfolie kann vorzugsweise am Halterahmen lösbar befestigt sein, um bis zur Montage das seitliche Eindringen von Kontamination zu verhindern. Die Schutzfolie kann überdies zu Kennzeichnungszwecken bedruckt sein. Außerdem können mehrere Einheiten durch die Schutzfolie trennbar zu einer Verpackungseinheit verbunden sein.

Der Halterahmen kann zusätzlich noch elastische Dichtelemente als dritte Komponente aufweisen. Zu dem Halterahmen können außer den Befestigungselementen bedarfsweise noch Positionierungs-, Dichtungs-, Kodierungs- oder Kennzeichnungselemente gehören.

Das Koppelmedium kann einkomponentig ausgeführt sein oder alternativ aus mehreren Schichten aufgebaut sein, die jeweils aus Silikonmaterialien mit unterschiedlichen physikalischen Eigenschaften bestehen.

Als besonders vorteilhafte Materialien zur Ausbildung des Koppelmediums haben sich Silikongele erwiesen, die z. B. unter der Handelsbezeichnung Silgel 612 erhältlich sind, da sich diese durch ein chemisch weitgehend inertes Verhalten und physiologische Unbedenklichkeit auszeichnen. Außerdem weisen sie äußerst günstige optische Eigenschaften auf, insbesondere eine hohe Transparenz, sowie Brechungsindizes, die denen optischer Gläser ähnlich sind. Weitere vorteilhaft verwendbare Silikonmaterialien sind unter den Bezeichnungen BAYER LSR 2003 mit 5 Shore A oder Wacker LR 3070/10 mit 10 Shore A erhältlich.

Im folgenden wird ein Ausführungsbeispiel der Erfindung anhand der Zeichnung dargestellt und näher erläutert. Es zeigen, jeweils in einer schematischen Schnittdarstellung:
- Figur 1: eine erste Ausführungsform eines mit einem Optikkörper verbundenen Koppelkörpers,
- Figur 2: eine zweite Ausführungsform eines mit einem Optikkörper verbundenen Koppelkörpers,
- Figuren 3 -5: jeweils eine weitere Ausführungsvariante eines Koppelkörpers.

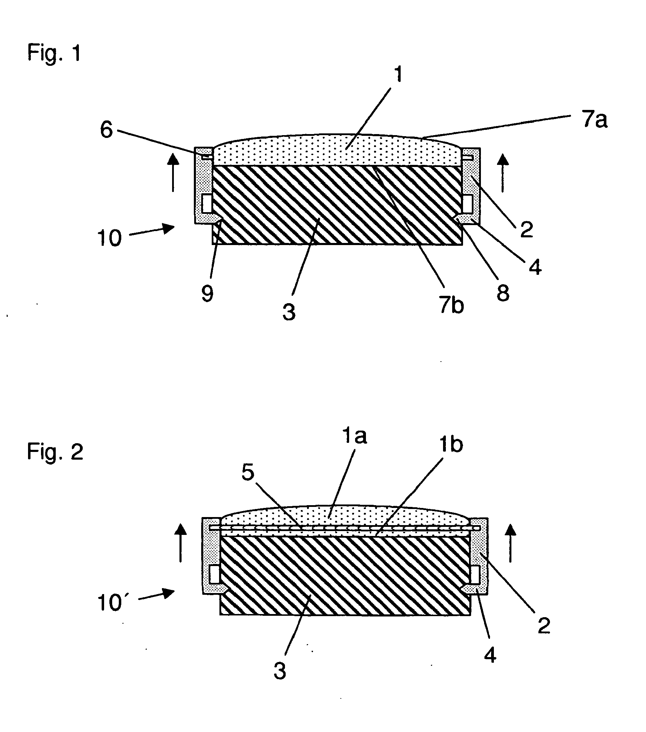

Die Figuren 1 und 2 zeigen jeweils einen erfindungsgemäßen Koppelkörper (10, 10'), der mit einem Optikkörper (3) verbunden ist. Der Optikkörper (3) ist Bestandteil einer in der Zeichnung nicht dargestellten optoelektronischen Vorrichtung in einem Kraftfahrzeug.

Der Optikkörper (3) ist diejenige optische Komponente der optoelektronischen Vorrichtung, die durch den Koppelkörper (10, 10') optisch an die ebenfalls nicht dargestellte Fahrzeugscheibe angekoppelt wird. Der Optikkörper (3) kann beispielsweise als eine Kameralinse, ein Prisma oder ein Lichtleitkörper ausgeführt sein und besteht dementsprechend aus einem transparenten und vorzugsweise festen Material, und zwar insbesondere aus einem Glas oder Kunststoff.

Der Koppelkörper (10, 10') besteht jeweils aus einem Halterahmen (2), der eine ring- oder rahmenförmige Berandung für ein vom Halterahmen (2) umfasstes Koppelmedium (1, 1a, 1b) ausbildet.

Das Koppelmedium (1, 1a, 1b) besteht aus einem Silikonmaterial und zwar vorzugsweise aus einem Silikongel oder aus einem spritzgegossenen niedrigviskosen Silikonkautschuk (liquid silicone rubber). Insbesondere bei der Ausführungsform gemäss der Figur 1 ist das Silikonmaterial hinsichtlich seiner Viskosität so gewählt, dass das Koppelmedium (1) allein von dem ring- oder rahmenförmigen Halterahmen (2) formstabil gehalten werden.

Formstabil bedeutet hierbei, dass das Koppelmedium (1, 1a, 1b) stabil innerhalb des durch den Halterahmen (2) aufgespannten, zylinder- oder prismenförmigen Volumens verbleibt und auch ohne eine zusätzliche Abstützung an seinen Stirnflächen, sich unter der Wirkung der Schwerkraft weder aus dem Halterahmen (2) nennenswert herauswölbt noch aus dem Halterahmen (2) herausfällt oder herausfließt. Dies schließt selbstverständlich nicht aus, dass zur zusätzlichen Stabilisierung des Koppelmediums (1, 1a, 1b) eine derartige zusätzliche Abstützung an den Stirnflächen durchaus vorgesehen sein kann.

Die Auswahl eines geeigneten Silikonmaterials ist dabei, bedingt durch die unterschiedlichen Viskositäten verschiedener Silikone, besonders von der Dimensionierung, also von Form und Größe des vorgesehenen Koppelkörpers (10, 10') abhängig. Da die Dimensionierung des Koppelkörpers (10, 10') wiederum stark von der vorgesehenen Anwendung abhängt, ist hier keine weitergehende Festlegung für die Materialwahl getroffen worden. Angesichts der Vielzahl von verfügbaren Silikonmaterialien mit unterschiedlichen Viskositäten bereitet es aber keine Schwierigkeiten, ein für den jeweiligen Anwendungsfall geeignetes Material auszuwählen, wobei, neben den für ein Koppelmedium typischen Eigenschaften wie hohe Transparenz und geringe Streuwirkung, lediglich noch auf einen geeigneten Brechungsindex des Koppelmediums (1, 1a, 1b) für den vorgesehenen Anwendungsfall zu achten ist.

Bei dem in der Figur 1 dargestellten Ausführungsbeispiels eines Koppelkörpers (10) ist das Koppelmedium (1) allein an der inneren Randfläche des Halterahmens (2) gehalten. Die innere Randfläche weist dazu eine angeformte Kontur (6) auf, die bei dem in der Figur 1 dargestellten Halterahmen (2) durch eine entlang der inneren Randfläche umlaufende Nut gebildet ist, mit der das Koppelmedium (1) eine formschlüssige Verbindung, hier in Form einer Nut-Feder-Verbindung, eingehen kann.

Die innere Randfläche des Halterahmens (2) kann selbstverständlich auch eine beliebige andere Kontur, etwa eine Labyrinthkontur; aufweisen, die geeignet ist das Koppelmedium (1) formschlüssig zu halten. Darüber hinaus oder alternativ kann das Koppelmedium (1) auch durch eine Verklebung mit der inneren Randfläche des Halterrahmens (2) verbunden sein.

In dem in der Figur 2 dargestellten Ausführungsbeispiel eines Koppelkörpers (10') ist zur mechanischen Stabilisierung in das Innere des Halterahmens (2) eine Trägerfläche (5) eingezogen. Das Koppelmedium (1a, 1b) ist hier entsprechend zweiteilig ausgeführt und zu beiden Seiten der Trägerfläche (5) angeordnet. Wie das Koppelmedium (1a, 1b) sollte auch die Trägerfläche (5) einen geeignet gewählten Brechungsindex aufweisen, hochtransparent sein und nur eine geringe Streuwirkung haben. Darüber hinaus bietet die Trägerfläche (5) eine einfache Möglichkeit, bedarfsweise auf beiden Seiten der Trägerfläche (5) zur Ausbildung des Koppelmediums (1a, 1b) unterschiedliche Silikonmaterialien zu verwenden, was je nach Anwendungsfall vorteilhaft sein kann.

Die Trägerfläche kann darüber hinaus ein optisches Filter ausbilden. Insbesondere kann die Trägerfläche sowohl transparente als auch lichtundurchlässige Teilflächen aufweisen und dergestalt als Streulichtblende wirken.

Die Trägerfläche (5) kann, wie in der Figur 2 dargestellt, sich über die gesamte durch den Halterahmen (2) aufgespannte Fläche erstrecken, so dass die Trägerfläche (5) vollständig oder zumindest in funktionsrelevanten Bereichen optisch transparent ausgebildet sein muss.

Die Trägerfläche kann alternativ auch als ein entlang der inneren Randfläche des Halterahmens umlaufende und mit dem Halterahmen verbundene Fläche, etwa in Form eines Kreisrings ausgebildet sein, die im mittleren Bereich einen Durchbruch aufweist, der entsprechend optisch durchlässig ist. Der Durchbruch wird dabei von den zu beiden Seiten der Trägerfläche aufgebrachten Koppelmedien vollständig ausgefüllt.

Die Ausführung eines Halterahmens (2) mit einer eingezogenen Trägerfläche (5) ermöglicht in jedem Fall die Verwendung von besonders niederviskosen Silikonmaterialien als Koppelmedium (1a, 1b), die aber dennoch stabil mit dem Halterahmen (2) verbunden werden können.

Der Koppelkörper (10, 10'), bestehend aus einem Halterahmen (2) und einem gehalterten Koppelmedium (1, 1a, 1b), kann als ein vormontierte Ersatzteil hergestellt und vertrieben werden. Ein so gebildeter Koppelkörper (10, 10') kann leicht über lösbare Verbindungselemente (8), hier beispielhaft als eine Rastvorrichtung dargestellt, die über angeformte Haltearme (4) mit dem Halterahmen (2) verbunden ist, an einer Halterung (9) an dem Optikkörper (3) befestigt werden. Über weitere hier nicht dargestellte lösbare Verbindungselemente kann der Halterahmen (2) darüber hinaus mit einer hier ebenfalls nicht dargestellten Haltevorrichtung mit der Fahrzeugscheibe verbunden werden.

Ein besonderer Vorteil des austauschbaren Koppelkörpers besteht darin, dass hierdurch bestimmte Servicearbeiten, die eine damit versehene optoelektronische Vorrichtung betreffen, deutlich kostengünstiger ausgeführt werden können. Wird nämlich eine mittels eines Koppelkörpers an eine Fahrzeugscheibe angekoppelte optoelektronische Vorrichtung von der Fahrzeugscheibe getrennt, was erforderlich ist, wenn beispielsweise die Fahrzeugscheibe ausgetauscht oder Arbeiten an der optoelektronischen Vorrichtung erforderlich sind, so wird das an der Fahrzeugscheibe und an dem Optikkörper anhaftende Koppelmedium oftmals zerstört. Da bisher das Aufbringen eines neuen Koppelmediums auf die optoelektronische Vorrichtung einen erheblichen Aufwand erforderte und von Servicewerkstätten oftmals gar nicht ausführbar war, musste in diesen Fällen die teure optoelektronische Vorrichtung vollständig ersetzt werden.

Der erfindungsgemäße austauschbare Koppelkörper erlaubt nun einen kostengünstigen Ersatz, in dem, nach dem Entfernen der Reste des zerstörten Koppelmediums von der Fahrzeugscheibe und dem Optikkörper (3), einfach der Halterahmen (2) des zu ersetzenden Koppelkörpers (10, 10') von dem Optikkörper (3) gelöst und ein neuwertiger optischer Koppelkörper (10, 10') auf den Optikkörper (3), aufgerastet wird. Ein kompletter Austausch der optoelektronischen Vorrichtung ist damit nicht mehr erforderlich.

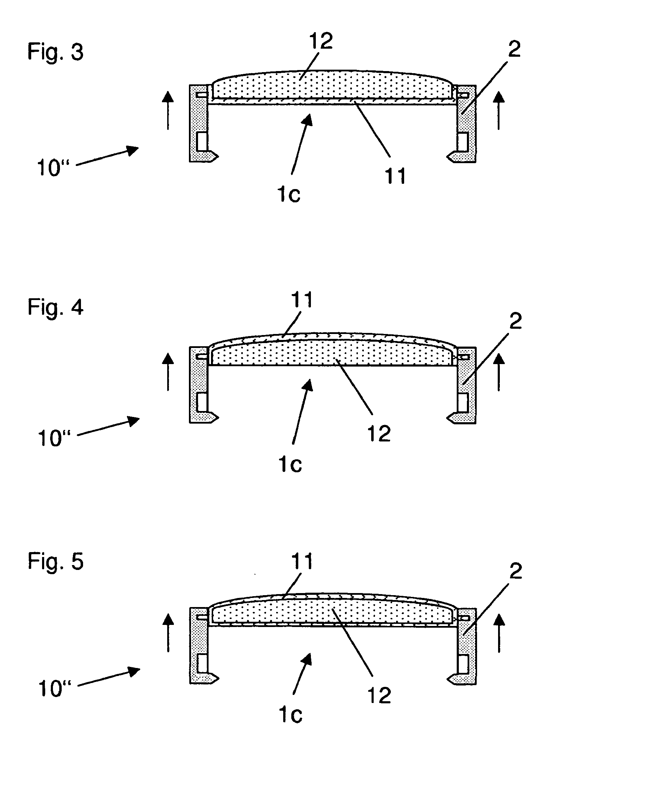

In den Figuren 3 bis 5 sind drei weitere vorteilhafte Ausführungen eines Koppelkörpers (10") dargestellt. Auf die Darstellung eines Optikkörpers wurde hier verzichtet. Die seitlich neben dem Koppelkörper (10") dargestellten Pfeile zeigen jeweils in Richtung auf eine nichtdargestellte Fahrzeugscheibe und veranschaulichen so die Montagerichtung. Der Koppelkörper (10") ist hier im wesentlichen so dargestellt, wie er als Einzelteil gefertigt und erhältlich ist.

Da der Koppelkörper (10") in diesen drei Ausführungsbeispielen keinen eingezogenen Trägerrahmen aus einem relativ starren Material aufweist, sind diese der in der Figur 1 dargestellten Ausführungen vergleichbar. Allerdings weist das Koppelmedium (1 c) hier einen mehrschichtigen Aufbau aus zwei unterschiedlichen Silikonmaterialien (11, 12) auf, wobei jeweils ein erstes Silikonmaterial (11) ein zweites Silikonmaterial (12) teilweise oder vollständig umgibt.

Es kann vorteilhaft vorgesehen sein, dass das erste Silikonmaterial (11) eine höhere Viskosität aufweist als das zweite Silikonmaterial (12), wodurch der aus beiden Silikonmaterialien (11, 12) bestehende Koppelkörpers (10") zusätzlich stabilisiert ist.

Darüber hinaus ermöglicht der geschichtete Aufbau des Koppelkörpers (10") eine besonders genaue Anpassung der optischen und mechanischen Eigenschaften an die Erfordernisse des jeweiligen Anwendungsfall.

In einer ersten Ausführungsvariante (Figur 3) bildet das erste Silikonmaterial (11) ein Art Wanne aus, die die mechanische Verbindung zum Halterahmen (2) herstellt. Die zur Fahrzeugscheibe hin ausgerichtete Mulde diese Wanne ist mit dem zweiten Silikonmaterial (12) ausgefüllt.

Eine umgekehrte Anordnung der Wanne ist in der Figur 4 dargestellt; die mit dem zweiten Silikonmaterial (12) befüllte Mulde ist hier in Richtung auf den hier nicht dargestellten Optikkörper hin geöffnet.

Praktisch eine Kombination der in den Figuren 3 und 4 gezeigten Ausführungen ist in dem Ausführungsvariante gemäß der Figur 5 verwirklicht. Hier ist der Koppelkörper (10") dadurch gebildet, dass das zweite Silikonmaterial (12) das erste Silikonmaterial (11) vollständig einschließt.

Besonders vorteilhaft kann für das niederviskosere erste Silikonmaterial (11) ein Silgel und für das hochviskosere zweite Silikonmaterial (12) ein spritzgiessbarer Silikonkautschuk (liquid silicone rubber) verwendet werden.

### Bezugszeichen

| | |
|---|---|
| 1, 1a, 1b, 1c | Koppelmedium |
| 2 | Halterahmen |
| 3 | Optikkörper |
| 4 | Haltearme |
| 5 | Trägerfläche |
| 6 | Kontur |
| 7a, 7b | Stirnflächen |
| 8 | Verbindungselemente |
| 9 | Halterung (des Optikkörpers 3) |
| 10, 10', 10" | Koppelkörper |
| 11 | erstes Silikonmaterial |
| 12 | zweites Silikonmaterial |

## Patentansprüche

1. Optischer Koppelkörper zur Ankopplung einer optoelektronischen Vorrichtung an eine Fahrzeugscheibe, mit einem transparenten Koppelmedium aus einem Silikonmaterial, welches von einem umlaufenden Rand eines Halterahmens umfasst ist,
wobei der Halterahmen als ein separates, nicht mit einem Gehäuseteil der optoelektronischen Vorrichtung verbundenes Einzelteil gefertigt ist,
und wobei der Halterahmen an einem Teil der optoelektronischen Vorrichtung ankoppelbar ist, wodurch zugleich der Koppelkörper an einer optisch wirksamen Fläche der optoelektronischen Vorrichtung zur Anlage kommt,
**dadurch gekennzeichnet,**
**dass** das Material des Koppelmediums (1, 1c), abhängig von der Form und der Größe des Halterahmens (2) so gewählt ist, dass das Koppelmedium (1, 1 c), auch ohne weitere Abstützung über der vom Halterahmen (2) aufgespannten Fläche, formstabil ist, und
**dass** die innere Randfläche des Halterahmens dergestalt ausgebildet ist, dass das Silikonmaterial formschlüssig und/oder durch chemische Bindungen gehalten wird.

2. Optischer Koppelkörper zur Ankopplung einer optoelektronischen Vorrichtung an eine Fahrzeugscheibe, mit einem transparenten Koppelmedium aus einem Silikonmaterial, welches von einem umlaufenden Rand eines Halterahmens umfasst ist,
wobei der Halterahmen als ein separates, nicht mit einem Gehäuseteil der optoelektronischen Vorrichtung verbundenes Einzelteil gefertigt ist,
und wobei der Halterahmen an einem Teil der optoelektronischen Vorrichtung ankoppelbar ist, wodurch zugleich der Koppelkörper an einer optisch wirksamen Fläche der optoelektronischen Vorrichtung zur Anlage kommt,
**dadurch gekennzeichnet,**
**dass** innerhalb des Halterahmens (2) eine formstabile Trägerfläche (5) eingezogen ist, und dass das Koppelmedium (1a, 1 b) von einer oder beiden Seiten auf der Trägerfläche (5) aufliegt, und
**dass** die innere Randfläche des Halterahmens (2) dergestalt ausgebildet ist, dass das Koppelmedium (1a, 1b) formschlüssig und/oder durch chemische Bindungen gehalten wird.

3. Optischer Koppelkörper zur Ankopplung einer optoelektronischen Vorrichtung an eine Fahrzeugscheibe, mit einem transparenten Koppelmedium aus einem Silikonmaterial, welches von einem umlaufenden Rand eines Halterahmens umfasst ist,
wobei der Halterahmen als ein separates, nicht mit einem Gehäuseteil der optoelektronischen Vorrichtung verbundenes Einzelteil gefertigt ist,
und wobei der Halterahmen an einem Teil der optoelektronischen Vorrichtung ankoppelbar ist, wodurch zugleich der Koppelkörper an einer optisch wirksamen Fläche der optoelektronischen Vorrichtung zur Anlage kommt,
**dadurch gekennzeichnet,**
**dass** innerhalb des Halterahmens (2) eine formstabile Trägerfläche (5) eingezogen ist, und dass das Koppelmedium (1a, 1 b) von einer oder beiden Seiten auf der Trägerfläche (5) aufliegt, und
**dass** die Trägerfläche (5) dergestalt ausgebildet ist, dass das Koppelmedium (1a, 1b) adhäsiv und/oder durch chemische Bindungen gehalten wird.

4. Koppelkörper nach einem der Ansprüche 1 bis 3, **dadurch gekennzeichnet, dass** die Ankopplung des Halterahmens (2) an einem Teil der optoelektronischen Vorrichtung mittels lösbarer Verbindungselemente (8) erfolgt.

5. Koppelkörper nach Anspruch 4, **dadurch gekennzeichnet, dass** die lösbaren Verbindungselemente (8) mindestens eine Rastvorrichtung ausbilden.

6. Koppelkörper nach Anspruch 4, **dadurch gekennzeichnet dass** die lösbaren Verbindungselemente (8) mindestens einen Einschub ausbilden.

7. Koppelkörper nach einem der Ansprüche 1 bis 3, **dadurch gekennzeichnet, dass** der Koppelkörper (10, 10', 10") als ein aus Halterahmen (2) und Koppelmedium (1, 1a, 1b, 1c) bestehendes, vormontiertes Einzelteil gefertigt ist.

8. Koppelkörper nach Anspruch 7, **dadurch gekennzeichnet, dass** vor dem Anfügen des Einzelteils an die optoelektronischen Vorrichtung mindestens eine freie Fläche des Koppelmediums (1, 1a, 1b, 1c) mit einem entfernbaren Schutzelement abgedeckt ist.

9. Koppelkörper nach Anspruch 8, **dadurch gekennzeichnet, dass** das entfernbare Schutzelement eine abziehbare Schutzfolie ist.

10. Koppelkörper nach einem der Ansprüche 1 bis 3, **dadurch gekennzeichnet, dass** das Koppelmedium (1, 1a, 1 b, 1c) aus einem Silikongel besteht.

11. Koppelkörper nach einem der Ansprüche 1 bis 3, **dadurch gekennzeichnet, dass** das Koppelmedium (1, 1a, 1 b, 1c) aus einem Flüssigsilikonkautschuk besteht.

12. Koppelkörper nach Anspruch 2 oder 3, **dadurch gekennzeichnet, dass** die Trägerfläche (5) kreisringförmig ausgebildet ist, wobei der die Trägerfläche (5) bildende Kreisring an einer Innenfläche des Halterahmens (2) anliegt.

13. Koppelkörper nach Anspruch 2, 3 oder 12, **dadurch gekennzeichnet, dass** die Trägerfläche (5) zumindest abschnittsweise optisch transparent ausgebildet ist.

14. Koppelkörper nach Anspruch 13, **dadurch gekennzeichnet, dass** die Trägerfläche (5) die durch den Halterahmen (2) aufgespannte Innenfläche vollständig ausfüllt.

15. Koppelkörper nach Anspruch 14, **dadurch gekennzeichnet, dass** das Koppelmedium (1 a, 1 b) auf beiden Seiten der transparenten Trägerfläche (5) aufliegt.

16. Koppelkörper nach Anspruch 2 oder 3, **dadurch gekennzeichnet, dass** die Trägerfläche (5) aus einem, im Vergleich zum Material des Koppelmediums (1a, 1 b) starren Material besteht.

17. Koppelkörper nach Anspruch 16, **dadurch gekennzeichnet, dass** die Trägerfläche (5) aus Kunststoff oder Glas besteht.

18. Koppelkörper nach einem der vorgenannten Ansprüche **dadurch gekennzeichnet, dass** das Koppelmedium (1, 1 a, 1 b, 1 c) aus mehreren Materialien (11, 12) besteht und einen geschichteten Aufbau aufweist.

## Claims

1. Optical coupler element for coupling an optoelectronic facility onto the windscreen of a vehicle, having a transparent coupling medium made of a silicone material which is enclosed by the encompassing edge of a retaining frame,
for which purpose the retaining frame is manufactured as a separate component part which is not connected to a housing constituent of the optoelectronic facility,
and with the retaining frame capable of being coupled to a constituent of the optoelectronic facility, as a result of which the coupler element at the same time comes to rest on an optically effective area of the optoelectronic facility,
**characterised in that**
the material of the coupling medium (1, 1c) is selected contingent on the shape and the size of the retaining frame (2) in such a manner that the coupling medium (1, 1c) is dimensionally stable even without any further support by way of the surface spanned by the retention frame (2),
that the inner edge surface of the retention frame is designed in such a manner that the silicone material is held in a positive fit and/or by means of chemical bonds.

2. Optical coupler element for coupling an optoelectronic facility onto the windscreen of a vehicle, having a transparent coupling medium made of a silicone material which is enclosed by the encompassing edge of a retaining frame,
for which purpose the retaining frame is manufactured as a separate component part which is not connected to a housing constituent of the optoelectronic facility,
and with the retaining frame capable of being coupled to a constituent of the optoelectronic facility, as a result of which the coupler element at the same time comes to rest on an optically effective area of the optoelectronic facility,
**characterised in that**
a dimensionally stable carrier surface (5) is inserted inside the retaining frame (2) and that the coupling medium (1a, 1 b) is supported on the carrier surface (5) on one or both sides, and
that the inner edge surface of the retention frame (2) is designed in such a manner that the coupling medium (1 a, 1 b) is held in a positive fit and/or by means of chemical bonds.

3. Optical coupler element for coupling an optoelectronic facility onto the windscreen of a vehicle, having a transparent coupling medium made of a silicone material which is enclosed by the encompassing edge of a retaining frame,
for which purpose the retaining frame is manufactured as a separate component part which is not connected to a housing constituent of the optoelectronic facility,
and with the retaining frame capable of being coupled to a constituent of the optoelectronic facility, as a result of which the coupler element at the same time comes to rest on an optically effective area of the optoelectronic facility,
**characterised in that**
a dimensionally stable carrier surface (5) is inserted inside the retaining frame (2) and that the coupling medium (1 a, 1 b) is supported on the carrier surface (5) on one or both sides, and
that the carrier surface (5) is designed in such a manner that the coupling medium (1 a, 1 b) is held by adhesion and/or by means of chemical bonds.

4. Coupling element according to any of Claims 1 to 3, **characterised in that** the coupling of the retaining frame (2) to a constituent of the optoelectronic facility is carried out by means of detachable connecting members (8).

5. Coupling element according to Claim 4, **characterised in that** the detachable connection members (8) constitute at least one snap-in mechanism.

6. Coupling element according to Claim 4, **characterised in that** the detachable connection members (8) constitute at least one slide-in unit.

7. Coupling element according to any of Claims 1 to 3, **characterised in that** the coupling element (10, 10', 10") is made as a pre-assembled component comprising a retaining frame (2) and coupling medium (1, 1 a, 1 b, 1 c).

8. Coupling element according to Claim 7, **characterised in that**, prior to appending the component to the optoelectronic facility, at least one free surface of the coupling medium (1, 1 a, 1 b, 1 c) is covered with a removable protective element.

9. Coupling element according to Claim 8, **characterised in that** the removable protective element is a peel-off protective film.

10. Coupling element according to any of Claims 1 to 3, **characterised in that** the coupling medium (1, 1a, 1b, 1c) consists of a silicone gel.

11. Coupling element according to any of Claims 1 to 3, **characterised in that** the coupling medium (1, 1a, 1b, 1c) consists of a liquid silicone rubber.

12. Coupling element according to Claim 2 or Claim 3, **characterised in that** the carrier surface (5) is of a circular design whereby the circle forming the carrier surface (5) abuts on an inside surface of the retaining frame (2).

13. Coupling element according to any of Claims 2, 3 or 12, **characterised in that** the carrier surface (5) is, at least section-wise, of an optically transparent design.

14. Coupling element according to Claim 13, **characterised in that** the carrier surface (5) completely fills in the inside area spanned by the retaining frame (2).

15. Coupling element according to Claim 14, **characterised in that** the coupling medium (1a, 1b) lies on both sides of the transparent carrier surface (5).

16. Coupling element according to Claim 2 or Claim 3, **characterised in that** the carrier surface (5) comprises a rigid material in comparison to the material of the coupling medium (1a, 1b).

17. Coupling element according to Claim 16, **characterised in that** the carrier surface (5) consists of plastic or glass.

18. Coupling element according to any of the aforementioned claims, **characterised in that** the coupling medium (1, 1a, 1b, 1c) is made of multiple materials (11, 12) and has a layered structure.

## Revendications

1. Corps de couplage optique pour coupler un dispositif optoélectronique avec une glace d'un véhicule automobile, avec un moyen de couplage transparent en matériau en silicone, qui est entouré par un bord périphérique d'un cadre de maintien,
sachant que ledit cadre de maintien est fabriqué en tant que pièce individuelle, séparée, qui n'est pas reliée à une partie du boîtier du dispositif optoélectronique,
et sachant que ledit cadre de maintien peut être couplé à une partie du dispositif optoélectronique, le corps de couplage venant ainsi porter simultanément contre une surface optiquement active du dispositif optoélectronique,
**caractérisé en ce que**
le matériau du moyen de couplage (1, 1c) est choisi en fonction de la forme et de la grandeur du cadre de maintien (2) de sorte que ledit moyen de couplage (1, 1c) est indéformable sur la surface sous-tendue par le cadre de maintien (2), même sans tout autre support, et
que la surface marginale, intérieure du cadre de maintien est réalisée de sorte que le matériau en silicone est maintenu par emboîtement et / ou par liaisons chimiques.

2. Corps de couplage optique pour coupler un dispositif optoélectronique avec une glace d'un véhicule automobile, avec un moyen de couplage transparent en matériau en silicone, qui est entouré par un bord périphérique d'un cadre de maintien,
sachant que ledit cadre de maintien est fabriqué en tant que pièce individuelle, séparée, qui n'est pas reliée à une partie du boîtier du dispositif optoélectronique,
et sachant que ledit cadre de maintien peut être couplé à une partie du dispositif optoélectronique, le corps de couplage venant ainsi porter simultanément contre une surface optiquement active du dispositif optoélectronique,
**caractérisé en ce que**,
à l'intérieur du cadre de maintien (2), est prévue une surface de support (5) indéformable et que le moyen de couplage (1a, 1 b) repose sur ladite surface de support (5), sur l'un ou sur les deux côtés, et
que la surface marginale du cadre de maintien (2) est réalisée de sorte que le moyen de couplage (1 a, 1 b) est maintenu par emboîtement et / ou par liaisons chimiques.

3. Corps de couplage optique pour coupler un dispositif optoélectronique avec une glace d'un véhicule automobile, avec un moyen de couplage transparent en matériau en silicone, qui est entouré par un bord périphérique d'un cadre de maintien,
sachant que ledit cadre de maintien est fabriqué en tant que pièce individuelle, séparée, qui n'est pas reliée à une partie du boîtier du dispositif optoélectronique,
et sachant que ledit cadre de maintien peut être couplé avec une partie du dispositif optoélectronique, le corps de couplage venant ainsi, simultanément, porter contre une surface optiquement active du dispositif optoélectronique,
**caractérisé en ce que**,
à l'intérieur du cadre de maintien (2), est prévue une surface de support (5) indéformable et que le moyen de couplage (1a, 1b) repose sur ladite surface de support (5), sur l'un ou sur les deux côtés, et
que a surface de support (5) est configurée de sorte que le moyen de couplage (1 a, 1 b) est maintenu par adhérence et / ou par liaisons chimiques.

4. Corps de couplage optique selon l'une des revendications 1 à 3, **caractérisé en ce que** le couplage du cadre de maintien (2) sur une partie du dispositif optoélectronique est effectué au moyen d'éléments de liaison amovibles (8).

5. Corps de couplage optique selon la revendication 4, **caractérisé en ce que** les éléments de liaison amovibles (8) forment au moins un dispositif d'encliquetage.

6. Corps de couplage optique selon la revendication 4, **caractérisé en ce que** les éléments de liaison amovibles (8) forment au moins un insert.

7. Corps de couplage optique selon l'une des revendications 1 à 3, **caractérisé en ce que** le corps de couplage (10, 10', 10") est fabriqué sous la forme d'un ensemble individuel pré-monté, qui est composé d'un cadre de maintien (2) et d'un moyen de couplage (1, 1a, 1b, 1c).

8. Corps de couplage optique selon la revendication 7, **caractérisé en ce que**, avant l'adjonction de la pièce individuelle au dispositif optoélectronique, au moins une surface libre du moyen de couplage (1, 1a, 1b, 1c) est recouvert avec au moins un élément de protection amovible.

9. Corps de couplage optique selon la revendication 8, **caractérisé en ce que** l'élément de protection amovible est une feuille de protection détachable.

10. Corps de couplage optique selon l'une des revendications 1 à 3, **caractérisé en ce que** le moyen de couplage (1, 1a, 1b, 1c) consiste en un gel de silicone.

11. Corps de couplage optique selon l'une des revendications 1 à 3, **caractérisé en ce que** le moyen de couplage (1, 1a, 1 b, 1 c) consiste en caoutchouc de silicone liquide.

12. Corps de couplage optique selon revendication 2 ou 3, **caractérisé en ce que** la surface de support (5) est réalisée en forme d'anneau circulaire, sachant que l'anneau circulaire, qui forme ladite surface de support (5), porte contre une face intérieure du cadre de maintien (2).

13. Corps de couplage optique selon revendication 2, 3 ou 12, **caractérisé en ce que** la surface de support (5) est optiquement transparente, au moins par sections.

14. Corps de couplage optique selon la 13, **caractérisé en ce que** la surface de support (5) remplie complètement la surface sous-tendue par le cadre de maintien (2).

15. Corps de couplage optique selon la revendication 14, **caractérisé en ce que** le moyen de couplage (1a, 1b) est appliqué sur les deux côtés de la surface de support (5) transparente.

16. Corps de couplage optique selon revendication 2 ou 3, **caractérisé en ce que** la surface de support (5) consiste en un matériau rigide par rapport au matériau du moyen de couplage (1a, 1b).

17. Corps de couplage optique selon la revendication 16, **caractérisé en ce que** la surface de support (5) est en matière synthétique ou en verre.

18. Corps de couplage optique selon l'une des revendications précédentes, **caractérisé en ce que** le moyen de couplage (1, 1a, 1b, 1c) consiste en plusieurs matériaux (11, 12) et présente une structure stratifiée.
